Europäisches Patentamt

European Patent Office

Office européen des brevets

(19)

(11)    EP 0 750 828 B1

(12)    EUROPÄISCHE PATENTSCHRIFT

(45) Veröffentlichungstag und Bekanntmachung des
Hinweises auf die Patenterteilung:
29.12.1999   Patentblatt 1999/52

(21) Anmeldenummer: 95913006.3

(22) Anmeldetag: 06.03.1995

(51) Int Cl.⁶: H04Q 7/38, G07B 15/00

(86) Internationale Anmeldenummer:
PCT/DE95/00293

(87) Internationale Veröffentlichungsnummer:
WO 95/25410 (21.09.1995 Gazette 1995/40)

(54) VERFAHREN ZUR ORTSBESTIMMUNG VON MOBILSTATIONEN

PROCESS FOR LOCATING MOBILE STATIONS

PROCEDE DE LOCALISATION DE STATIONS MOBILES

(84) Benannte Vertragsstaaten:
AT BE CH DE DK ES FR GB GR IE IT LI LU MC NL
PT SE

(30) Priorität: 16.03.1994   DE 4408953

(43) Veröffentlichungstag der Anmeldung:
02.01.1997   Patentblatt 1997/01

(73) Patentinhaber: DeTeMobil
Deutsche Telekom MobilNet GmbH
53227 Bonn (DE)

(72) Erfinder:
• EIZENHÖFER, Alfons
D-90518 Altdorf (DE)
• MERTENS, Reinhold
D-91207 Lauf a.d. Pegnitz (DE)

(74) Vertreter: Riebling, Peter, Dr.-Ing.
Patentanwalt,
Rennerle 10
88131 Lindau (DE)

(56) Entgegenhaltungen:
EP-A- 0 058 596          EP-A- 0 240 051
WO-A-92/02104           GB-A- 2 247 128

• PATENT ABSTRACTS OF JAPAN vol. 016 no.
199 (P-1351) ,13.Mai 1992 & JP,A,04 030298
(NISSIN ELECTRIC CO LTD) 3.Februar 1992,

**Beschreibung**

Die Erfindung betrifft ein Verfahren zur Ortsbestimmung von Mobilstationen in einem zellular aufgebauten Mobilfunknetz, wobei die Mobilstationen zusätzlich zu den Funktionen innerhalb des Mobilfunknetzes zur Ortsbestimmung Signale von Sendern auswerten, die jeweils eine örtlich begrenzte Triggerzelle (underlay broadcast cell) bilden.

Zur Erhebung von Nutzungsgebühren (Maut) für Verkehrswege, insbesondere Straßen, sind verschiedene Verfahren bekanntgeworden. Allgemeine Verbreitung haben bis jetzt jedoch nur Mautstationen gefunden, an denen die Fahrzeuge anhalten und nach Entrichtung der Maut die gebührenpflichtige Straße befahren dürfen. Bei viel befahrenen Straßen führt dieses trotz einer Vielzahl einzelner Zahlstellen zu Staus. Auch Einrichtungen, bei denen man in langsamer Fahrt eine Münze in einen Trichter wirft, bringen nur beschränkt Abhilfe.

Darüberhinaus sind Verfahren zur automatischen Ermittlung und Abbuchung von Nutzungsgebühren bekanntgeworden. Bei dem in NTZ, Band 46 (1993), Heft 4 "Zukünftige automatische Gebührenerfassung für den Straßenverkehr" beschriebenen Verfahren werden Erhebungsstellen mit Einrichtungen ausgerüstet, bei denen eine Kommunikation zwischen der Erhebungsstelle und dem Fahrzeug stattfindet.

Bei derartigen Systemen hat die Ortsbestimmung, nämlich die Feststellung, ob ein Fahrzeug eine Erhebungsstelle passiert bzw. sich auf einer gebührenpflichtigen Straße befindet, eine erhebliche Bedeutung. Zur Ortsbestimmung sind Bakensysteme mit Infrarot oder Mikrowellen bekanntgeworden. Dabei dient eine Funkübertragung ausschließlich der Ortsbestimmung. Bei diesen Systemen sind oft erhebliche bauliche Maßnahmen erforderlich.

Ein in VDI-Nachrichten vom 20.08.93, Seiten 2 bis 3 beschriebenes Erfassungssystem nutzt eine Ortsbestimmung des Fahrzeugs mit Hilfe des GPS-Systems (global positioning system), mit welchem eine Ortsbestimmung durch Satelliten erfolgt. Abgesehen von einer möglicherweise für die Zwecke der Gebührenerhebung nicht ausreichenden Genauigkeit des GPS-Systems erfordert eine Ortsbestimmung mit Hilfe des GPS-Systems in den Fahrzeugen einen zusätzlichen Aufwand.

Durch WO 92/02104 ist ein zellulares Mobilfunksystem bekanntgeworden, bei welchem innerhalb der einzelnen Zellen durch Identifikationssender der jeweilige Ort der Mobilstationen für Zwecke des Wechselns (Hand-over) in eine andere Zelle festgestellt werden kann. Hierzu sind pro Zelle jedoch nur wenige Identifikationssender erforderlich, die lediglich die jeweilige Identifikation aussenden.

Aufgabe der vorliegenden Erfindung ist es, eine Ortsbestimmung von Mobilstationen und damit von Fahrzeugen zuverlässig mit einem möglichst geringen Aufwand an Infrastruktur und an Fahrzeugeinrichtungen durchzuführen, wobei jeweils in kurzer Zeit Signale eines Senders aus einer großen Zahl von Sendern erkannt und zuverlässig ausgewertet werden.

Diese Aufgabe wird erfindungsgemäß dadurch gelöst, daß die Mobilstationen Informationen, die für die jeweilige Triggerzelle von dem zugeordneten Sender abgestrahlt werden, mit den Informationen über die Triggerzellen vergleichen, die im Mobilfunknetz abgestrahlt werden, und daß die von dem der Triggerzelle zugeordneten Sender empfangenen Signale nur dann zur Ortsbestimmung verwendet werden, wenn die Informationen übereinstimmen.

Ein Vorteil der Erfindung besteht darin, daß ein bereits existierendes Mobilfunknetz gleichzeitig die Funktion der Ortsbestimmung erfüllt. Dabei ist das erfindungsgemäße Verfahren in vorteilhafter Weise zusammen mit dem GSM-Netz anwendbar, eine Anwendung in zellular aufgebauten Mobilfunknetzen mit anderen Spezifikationen ist jedoch nicht ausgeschlossen. Das erfindungsgemäße Verfahren benötigt auf der Infrastrukturseite lediglich einfache Sender am Rande der Verkehrswege, insbesondere der Autobahn. Dadurch werden erhebliche Infrastrukturkosten gespart. Im Fahrzeug wird die Mobilstation um einige Software-Funktionen erweitert, die es ermöglichen, beispielsweise gleichzeitig zu telefonieren und die Ortsbestimmung durchzuführen. Die Mobilstationen werden in großen Stückzahlen preisgünstig hergestellt, was auch für die zur Durchführung des erfindungsgemäßen Verfahrens erweiterten Mobilstationen leicht möglich ist. Dabei können auch Mobilstationen eingesetzt werden, die nicht zum Telefonieren, sondern ausschließlich zur Ortsbestimmung ausgelegt sind, wobei der zum Telefonieren erforderliche Aufwand entfällt.

Im GSM-Netz ist die Reichweite unkritisch und das Übertragungsverfahren für Fahrzeuggeschwindigkeiten von über 300 km/h ausgelegt. Es läßt sich somit preisgünstig ein Netz zur Autobahngebührenerhebung nach dem erfindungsgemäßen Verfahren aufbauen.

Durch den Vergleich der im Mobilfunknetz abgestrahlten mit den vom Sender empfangenen Informationen wird eine hohe Sicherheit der Ortsbestimmung gewährleistet. Diese Informationen können sich, gegebenenfalls zusätzlich, auf die Frequenzen der den Triggerzellen zugeordneten Sender beziehen.

Dafür ist bei einer Weiterbildung des erfindungsgemäßen Verfahrens vorgesehen, daß den Mobilstationen die Frequenzen der Triggerzellen durch das Mobilfunknetz im Broadcast-Verfahren mitgeteilt werden. Hierbei wird in vorteilhafter Weise die Fähigkeit eines zellular aufgebauten Mobilfunknetzes ausgenutzt, eine Mobilstation jeweils einer Zelle zuzuordnen und damit den jeweiligen Ort der Mobilstation ungefähr zu bestimmen. Die Mobilstation braucht bei dieser Weiterbildung dann nicht mehr alle im Erfassungsgebiet für Triggerzellen verwendete Frequenzen zu suchen.

Eine vorteilhafte Ausführungsform des erfindungsgemäßen Verfahrens besteht darin, daß die Mobilstationen die Feldstärke der jeweiligen Triggerzelle zur Ortsbestimmung auswerten. Dabei ist vorzugsweise vorgesehen, daß von den Mobilstationen mindestens zwei Feldstärkepegel der Triggerzelle unterschieden werden.

Sofern es zweckmäßig sein sollte, für die einzelnen Triggerzellen verschiedene Feldstärkepegel vorzusehen, ist es vorteilhaft, wenn der oder die für die Triggerzellen relevante(n) Feldstärkepegel durch das Mobilfunknetz im Broadcast-Verfahren mitgeteilt werden.

Eine vorteilhafte Ausgestaltung des erfindungsgemäßen Verfahrens ist dadurch gekennzeichnet, daß die Mobilstationen die Frequenzen von Triggerzellen regelmäßig abtasten und daß eine der Frequenzen häufiger abgetastet wird, sobald der Empfangspegel einen ersten vorgegebenen Feldstärkepegel überschreitet.

Bei dieser Ausgestaltung wird einerseits sichergestellt, daß die vom Mobilfunknetz mitgeteilten Frequenzen von Triggerzellen, welchen sich das Fahrzeug möglicherweise nähert, genügend häufig abgetastet werden. Andererseits wird im Bereich einer Triggerzelle die Frequenz dieser Triggerzelle genügend häufig abgetastet, um innerhalb eines kurzen Zeitraums des Durchfahrens dieses Bereiches eine Auswertung der empfangenen Information zu ermöglichen. Eine weitere vorteilhafte Ausgestaltung der Erfindung führt dadurch zu einer genauen Ortsbestimmung, daß die Mobilstation die Frequenzen von Triggerzellen regelmäßig abtastet und daß die empfangene Information ausgewertet wird, wenn der Empfangspegel einen vorgegebenen Feldstärkepegel überschreitet.

Eine Erhöhung der Sicherheit der Ortsbestimmung sowie die Gewinnung einer Richtungsinformation kann dadurch erzielt werden, daß die Ergebnisse der Auswertung von Signalen mehrerer Sender (Triggerzellen) miteinander verknüpft werden.

Zur Vereinfachung der Mobilstationen trägt erheblich bei, wenn die Sender der Triggerzellen Signale aussenden, die aus einzelnen Bursts bestehen, die der physikalsichen Ebene im GSM-Standard entsprechen. Vorzugsweise ist dabei vorgesehen, daß abwechselnd Frequenzkorrektur-Bursts (FB) und Informations-Bursts (UBB) gesendet werden.

Eine Weiterbildung der Erfindung besteht darin, daß die von den Sendern ausgesandten Signale eine Identifizierung einer für eine Gebührenerhebung maßgeblichen Erhebungsstelle enthalten. Hierdurch ist eine einwandfreie Ortsbestimmung möglich. Um im Falle einer Erhebungsstelle aus mehreren Triggerzellen eine entsprechende Auswertung in den Mobilstationen zu ermöglichen, kann dabei vorgesehen sein, daß die von den Sendern ausgesandten Signale ferner für den Fall, daß mehrere Triggerzellen eine Erhebungsstelle für Benutzungsgebühren für Verkehrswege bilden, eine Nummer der jeweiligen Triggerzelle bezüglich ihrer Zugehörigkeit zur Erhebungsstelle enthalten.

Eine Erhebung von Benutzungsgebühren für Verkehrswege macht im allgemeinen auch eine Kontrolle erforderlich, ob die den Verkehrsweg benutzenden Fahrzeuge zuvor Gegenstand einer Erhebung waren. Dazu sind verschiedene Verfahren bekanntgeworden - unter anderem solche, bei welchen Fahrzeuge, welche die Verkehrswege rechtmäßig benutzen, geeignete Signale aussenden. Bei der Durchführung des erfindungsgemäßen Verfahrens kann es hierfür vorteilhaft sein, daß die Signale der Sender jeweils eine Information enthalten, ob an der jeweiligen Erhebungsstelle eine Überwachung bezüglich einer Gebührenerhebung stattfindet.

Eine erfindungsgemäße Anordnung besteht darin, daß die Mobilstationen Informationen, die für die jeweilige Triggerzelle von dem zugeordneten Sender abgestrahlt werden, mit den Informationen über die Triggerzellen vergleichen, die im Mobilfunknetz abgestrahlt werden, und daß die von dem der Triggerzelle zugeordneten Sender empfangenen Signale nur dann zur Ortsbestimmung verwendet werden, wenn die Informationen übereinstimmen.

Um Fehler bei der Erhebung der Gebühren zu vermeiden, ist unter anderem zu unterscheiden, ob ein Fahrzeug auf einer gebührenpflichtigen Straße oder auf einer in unmittelbarer Nähe parallel verlaufenden Straße fährt. Dieses kann mit Hilfe einer Weiterbildung der erfindungsgemäßen Anordnung dadurch erfolgen, daß die Sender zweier eine Erhebungsstelle bildender Triggerzellen auf verschiedenen Seiten eines Verkehrsweges angeordnet sind.

Das erfindungsgemäße Verfahren kann gegebenenfalls auch mit anderen Verfahren zur Ortsbestimmung, beispielsweise mit der Benutzung des GPS kombiniert werden. Es ist ferner nicht auf eine Ortsbestimmung für die Autobahngebührenerfassung beschränkt, sondern kann auch für andere Zwecke eingesetzt werden, die eine Ortsbestimmung benötigen.

Einzelheiten des Mobilfunknetzes nach der GSM-Empfehlung (im folgenden GSM-Netz genannt) sind in der technischen Spezifikation GSM 05.01 des European Telecommunications Standards Institute (ETSI) Version 4.0.1, Oktober 1992 und den Empfehlungen GSM 05.02 bis 05.10 beschrieben.

Im folgenden sind noch einige Vorteile und Möglichkeiten des erfindungsgemäßen Verfahrens angegeben:

    1. Normaler GSM-Betrieb:

        Die Ortsbestimmung erfolgt parallel zum normalen GSM Betrieb und stört diesen in keiner Weise. Die Ortsbestimmung ist insbesondere auch während eines Gespräches möglich.

    2. Betreiber-Unabhängigkeit:

        Die Ortsbestimmung ist für alle Mobilstationen möglich. Dies gilt für Teilnehmer in einem beliebigen GSM-Netz, jedoch auch für Mobilstationen, die keinem GSM-Netz zugeordnet sind.

    3. Genauigkeit besser als 20m:

        Die Genauigkeit ist von der Geschwindigkeit anhängig. Bei einer Geschwindigkeit von 250 km/h beträgt die Genauigkeit etwa 20m. Im Ortsbereich hängt die Genauigkeit nur von der Antennencharakteristik ab.

4. Wirkungsbereich:

Die Ortsbestimmung kann nur an den Stellen erfolgen, an denen sich eine Triggerzelle befindet. Die Ortsbestimmung ist daher nicht kontinuierlich und nicht flächendeckend.

5. Fahrtrichtungserkennung:

Durch Zweifachtriggerung (zwei Triggerzellen an einer Erhebungsstelle) ist Fahrtrichtungserkennung möglich.

6. Frequenzbedarf:

Der Frequenzbedarf ist sehr gering und kann gut an eine vorhandene Funknetzplanung angepaßt werden. Alle Triggerzellen könnten die gleiche Frequenz benutzen.

Eine Fernwartung und Überwachung der den Triggerzellen zugeordneten Sender sind gemäß einer vorteilhaften Anordnung zur Durchführung des erfindungsgemäßen Verfahrens ohne Kabelverbindung dadurch möglich, daß der zugeordnete Sender mit einer Sende/Empfangseinrichtung verbunden ist, welche funktionsmäßig einer Mobilstation innerhalb des Mobilfunknetzes entspricht und welche Daten von und zu einer Wartungs- und Betriebseinrichtung (OMC) überträgt.

Sollte im Einzelfall auf die mit der Benutzung des Mobilfunknetzes verbundenen Vorteile verzichtet werden, so kann eine Ortsbestimmung eines Fahrzeuges, das sich auf einem Verkehrsweg befindet, auch lediglich dadurch erfolgen, daß von in den Fahrzeugen angeordneten Empfängern Signale von auf Abschnitte des Verkehrsweges gerichteten Sendern empfangen werden, wobei die Signale Informationen zur Identifizierung des jeweiligen Senders enthalten, daß eine Ortsbestimmung nur erfolgt, wenn Signale zweier einander zugeordneter Sender empfangen werden, und daß die einander zugeordneten Sender auf beiden Seiten des Verkehrsweges angeordnet sind.

Diese Anordnung hat den Vorteil, daß Fahrzeuge auf anderen zu dem Verkehrsweg parallel verlaufenden Verkehrswegen nicht geortet werden. Dabei ist eine einfache Erkennung der Fahrtrichtung dadurch möglich, daß die einander zugeordneten Sender in Fahrtrichtung gegeneinander versetzt angeordnet sind.

Ausführungsbeispiele der Erfindung sind in der Zeichnung anhand mehrerer Figuren dargestellt und in der nachfolgenden Beschreibung näher erläutert. Es zeigt:

Fig. 1     eine schematische Darstellung einer ersten Anordnung zur Durchführung des erfindungsgemäßen Verfahrens,

Fig. 2     eine schematische Darstellung einer Triggerzelle,

Fig. 3     ein Blockschaltbild einer Fahrzeugeinrichtung,

Fig. 4     ein weiteres Ausführungsbeispiel einer Anordnung zur Durchführung des erfindungsgemäßen Verfahrens,

Fig. 5     eine Erhebungsstelle mit zwei Triggerzellen,

Fig. 6     schematische Darstellungen der von dem Sender der Triggerzelle abgestrahlten Signale,

Fig. 7     die Struktur eines Synchronisierungskanals nach der GSM-Empfehlung,

Fig. 8     die Struktur eines Kanals der Triggerzelle,

Fig. 9     ein Diagramm zur Erläuterung der Abtastung verschiedener Frequenzen durch eine Mobilstation im Bereitschaftsbetrieb,

Fig. 10    ein Diagramm zur Erläuterung der Abtastung verschiedener Frequenzen durch die Mobilstation im Sende/Empfangsbetrieb,

Fig. 11    ein Diagramm zur Erläuterung des Empfangs der signale der Triggerzelle während des Bereitschaftsbeiriebes der Mobilstation und

Fig. 12    ein Diagramm zur Erläuterung des Empfangs der Signale der Triggerzelle während einer Verbindung der Mobilstation mit der Basisstation des GSM-Netzes.

Gleiche Teile sind in den Figuren mit gleichen Bezugszeichen versehen. Zur Kennzeichnung verschiedener Signale und Komponenten des GSM-Netzes werden in der Literatur verschiedene Abkürzungen benutzt, von denen einige im folgenden anhand ihrer in der Facnwelt üblichen englischsprachigen Bezeichnung erläutert werden.

| AGCH | Access Grant Channei |
|---|---|
| BA | Basestation Allocation |
| BCCH | Broadcast Control Channel |
| BSIC | Base Station Identity Code |
| DCCH | Dedicated Control Channel |
| FB | Frequency correction bursts |
| FCCH | Frequency Correction Channel |
| GPRS | General Packet Radio Service |
| MS | Mobilstation |
| MSC | Mobile Services Switching Centre |
| PCH | Paging Channel |
| RFC | Reduced TDMA Frame Number |
| S-Zelle | Serving cell; Funkzelle aus dem normalen GSM-Netz |
| SACCH | Slow Associated Control Channel |
| SCH | Synchronization Channel |
| SMSCB | Short Message Service Cell Broadcast |

Außerdem werden im Zusammenhang mit der Erfindung folgende Abkürzungen verwendet:

| AGE | Autobahn-Gebühren-Erhebung |
|---|---|
| UB | Underlay Broadcast Burst |
| UBC | Underlay Broadcast Cell |
| UBCH | Underlay Broadcast Channel. |

Mittel zur Durchführung des Verfahrens

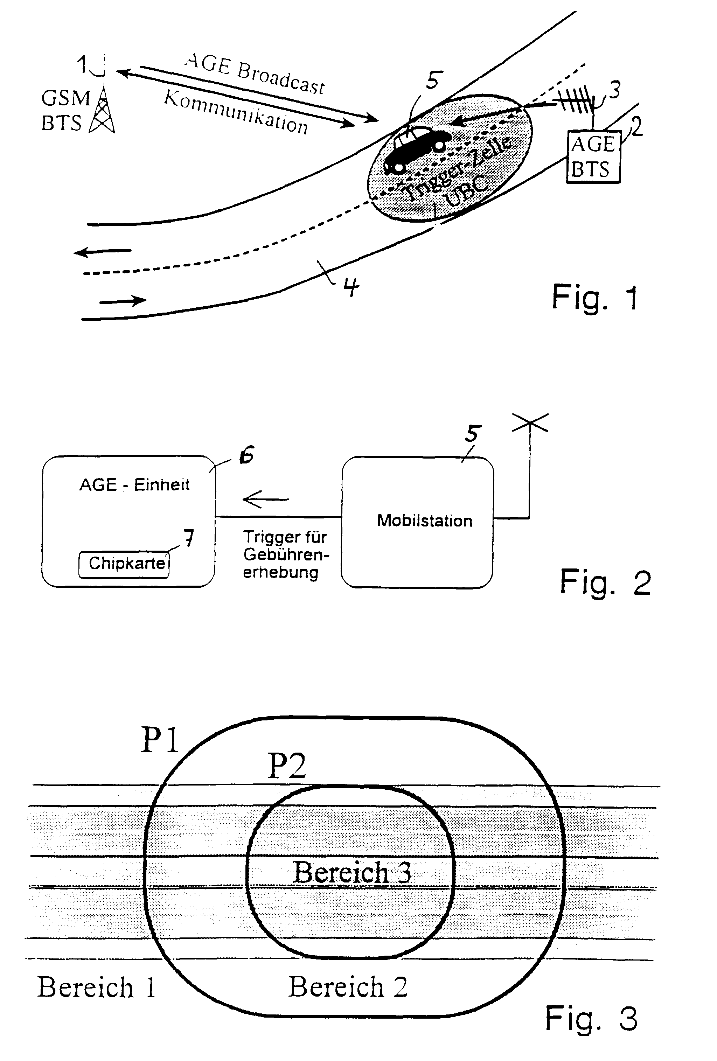

Zur Durchführung des erfindungsgemäßen Verfahrens dienen bei dem Ausführungsbeispiel nach Fig. 1 drei Komponenten, nämlich

- das GSM-Netz, das in Fig. 1 durch eine Basisstation 1 (GSM-BTS) dargestellt ist,
- eine Triggerzelle, das heißt der Sendebereich einer Basisstation 2 (AGE-BTS), deren Antenne 3 auf eine Straße 4 gerichtet ist, und
- eine Mobilstation, die in einem Kraftfahrzeug 5 angeordnet ist.

Bei der Komponente GSM-Netz handelt es sich um das öffentliche GSM-Netz. Für die Ortsbestimmung ist es nicht nötig Teilnehmer in einem GSM-Netz zu sein. Die Mobilstation benötigt lediglich Informationen über die Frequenz der Triggerzelle. Die Ortsbestimmung kann auch ohne GSM-Netz erfolgen. In diesem Fall ist jedoch eine Vorkenntnis der UBC-Frequenzen erforderlich.

Die Serving Cell oder auch S-Zelle ist in der GSM-Definition die Funkzelle aus dem GSM-Mobilfunknetz eines beliebigen Netzbetreibers, der sich die Mobilstation zugeordnet hat. Im Zusammenhang mit der AGE wird die Zelle oder die Zellen der GSM-Netze als S-Zelle bezeichnet, in deren Bereich die UBC liegt. Lage, Größe und Verkehrskapazität der S-Zellen sind für die Ortsbestimmung mit UBC nicht von Bedeutung. Es werden keinerlei Anforderungen an die S-Zellen gestellt (Standort, Frequenz, Zellradius, ...), mit der Ausnahme, daß ein AGE-Broadcast-Kanal eingerichtet wird. Damit die Ortsbestimmung von Mobilstationen aus verschiedenen GSM-Netzen durchgeführt werden kann, müssen alle betroffenen Netzbetreiber den AGE-Broadcast-Kanal einrichten. Der AGE-Broadcast-Kanal kann in der Art des Cell Broadcast Channels CBCH für den Short Message Service Cell Broadcast SMSCB gestaltet werden. Es gibt aber auch andere Möglichkeiten, z.B. den Broadcast-Dienst des neuen Paketdatendienstes GPRS.

Im AGE-Broadcast-Kanal werden Informationen gesendet, die sich in zwei Gruppen unterteilen lassen, in Informationen für das schnelle Auffinden der UBC und in Informationen für den Nutzer:

Davon sind UBC-Informationen die Frequenz der UBC, der minimale Empfangspegel und die Identität der Erhebungsstelle. Nutzerinformationen sind Tarifinformationen, Verkehrsinformationen und sonstige Informationen der Autobahnbetreibergesellschaft.

Die UBC-Informationen sind für die Ortsbestimmung nötig, die Nutzerinformationen sind optional. Die Tarifinformationen können, je nach Systemansatz, für das Abbuchen der Gebühren erforderlich sein, sie sind für die Ortsbestimmung jedoch unerheblich. Falls darüber hinaus Kommunikation zwischen der AGE-Einheit im Fahrzeug und dem Netz erforderlich ist, z.B. für Kontrollzwecke, dann wird diese über die S-Zelle abgewickelt.

Die Komponente Triggerzelle (Underlay Broadcast Cell UBC) ist so geformt, daß sie möglichst nur die Fahrbahn an der Erhebungsstelle versorgt. Sie besteht lediglich aus einem schwachen Sender 2 (Fig. 1), der das Triggersignal aussendet. Die meisten Funktionen einer GSM-BTS, wie z.B. Frequency-Hopping, Power-Control, Ciphering, Nutzkanäle, Sprachcodierung, Datendienste, Hand-over, Paging, usw., sind nicht erforderlich. Sogar die gesamte $A_{bis}$-Schnittstelle ist nicht erforderlich, da die Triggerzelle keine Verbindung zum GSM-Netz benötigt. Die Ausgangsleistung der Sendeendstufe ist sehr klein (unter 1 Watt), da die Reichweite beschränkt ist und zudem Richtantennen eingesetzt werden. Die BTS in der Triggerzelle ist daher sehr einfach und kostengünstig.

Um den Triggervorgang schnell und sicher zu gestalten, wurde die Triggerzelle in drei Bereiche unterteilt (Fig. 3).

Bereich 1: außerhalb der Triggerzelle, wobei gilt Empfangspegel UBC-Rx < P1;
Bereich 2: Lesebereich, wobei gilt P1 < Empfangspegel UBC-Rx < P2;
Bereich 3: Triggerbereich, wobei gilt P2 Empfangspegel UBC-Rx.

Das Fahrzeug ist mit einer modifizierten GSM-Mobilstation 5 (Fig. 2) und der AGE-Einheit 6 ausgerüstet. Die Mobilstation ist eine normale GSM-Mobilstation, oder eine preisgünstige AGE-Mobilstation ohne Display, Tastatur, Hörer, Mikrofon usw.handeln. Sie ist in jedem Fall um die AGE-Zusatzfunktionen erweitert. So hat die Mobilstation eine Schnittstelle zur AGE-Einheit und Software um den AGE-Broadcast-Kanal zu lesen und entsprechend darauf zu reagieren. Sie ist weiterhin in der Lage, die Suche nach Nachbarzellen schneller durchzuführen als Mobilstationen, die sparsam mit der Energie von Batterien umgehen müssen. Wenn die Mobilstation die Triggerzelle durchfährt, empfängt sie das Signal der UBC und löst in der AGE-Einheit den Trigger aus, der zur Abbuchung von Gebühren auf der Chipkarte 7 führt.

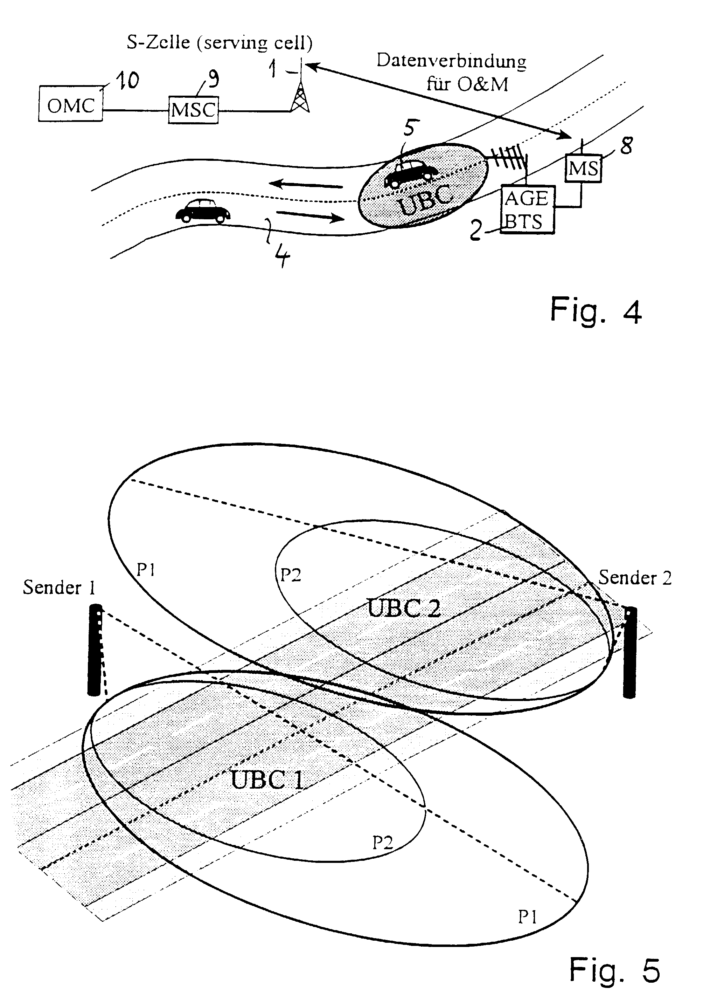

Die Bedienung und Wartung der S-Zelle und der Mobilstation im Fahrzeug geschieht nach den Vereinbarungen, die in den einzelnen GSM-Netzen gelten. Die BTS der Triggerzelle hat jedoch in der Regel keine Verbindung zu einem Nachrichtennetz. Es werden jedoch Überwachungsfunktionen benötigt. Dazu wird die BTS 2 der Triggerzelle mit einer normale Mobilstation 8 (Fig. 4) ausgerüstet. Über diese wird bei Bedarf eine Datenverbindung über die Basisstation 1 und das Vermittlungssystem 9 des GSM-Netzes zu einer Operation & Maintenance-Zentrale 10 hergestellt. Es ist hervorzuheben, daß die Daten der Triggerzelle praktisch nie geändert werden müssen, da alle wichtigen Information über die S-Zelle abgestrahlt werden.

Funktionsweise

Das erfindungsgemäße Verfahren wird nachfolgend anhand der Aktionen der Mcbilstation unter bezugnahme auf Fig. 3 beschrieben.

Die Mobilstation empfängt das von der S-Zelle ausgestrahlt AGE-Broadcast-Signal, speichert die UBC-Informationen und leitet die Nutzerinformation zur Anzeige weiter. Dem Teilnehmer wird so der aktuelle Tarif bereits angezeigt, bevor er den nächsten Streckenabschnitt befährt. Auf diese Weise hat der Teilnehmer bei dynamischen, d.h. zeitlich veränderbaren Gebühren, die Möglichkeit, sich jeweils aktuell für oder gegen die Autobahn zu entscheiden. Das Lesen des AGE-Broadcast-Kanals geschieht mindestens immer dann, wenn sich die Mobilstation einer neuen S-Zelle zuordnet. Befindet sich die Mobilstation im Gesprächszustand, dann wird ihr die UBC-Information über den AGCH der S-Zelle mitgeteilt.

Die Mobilstation kennt die Frequenzen der Triggerzellen aus dem AGE-Broadcast-Kanal und tastet im Bereich 1, d.h. außerhalb der Triggerzelle, diese Frequenzen gleichmäßig ab. Um möglichst viele Abtastwerte zu erhalten, sollten nicht mehr als 10 verschiedenen Triggerfrequenzen verwendet werden. Schon aus Gründen der Funknetzplanung wird im Umkreis einer S-Zelle möglichst für alle Triggerzellen die gleiche Frequenz verwendet werden. Die Mobilstation bildet alle 120 ms den Mittelwert über die Meßwerte der letzten 240 ins und erhält so den Wert UBC-Rx.

Befindet sich die Mobilstation im Bereich 2 einer Triggerzelle, d.h. der Empfangspegel UBC-Rx hat den Wert P1 überschritten, wird die Abtastrate für die aktuelle Triggerzelle auf mindestens 10 Abtastungen in 120 ms erhöht. Die Abtastung der übrigen Triggerfrequenzen kann gleichzeitig bis auf eine Abtastung pro 120 ms erniedrigt werden. Die Mobilstation bildet ständig den Mittelwert über die Meßwerte der letzten 120 ms und erhält so den Wert UBC-Rx.

Wurde eine Triggerfrequenz mit einer Feldstärke UBC-Rx > P1 entdeckt, so versucht die Mobilstation das Signal zu lesen. Dazu empfängt sie den Frequency Correction Burst FB auf dem Frequency Correction Channel FCCH und den Underlay Broadcast Burst UB auf dem Underlay Broadcast Channel UBCH. Um das Multiplexformat der UBC zu überprüfen muß sie sowohl den FB als auch den UB mindestens zweimal empfangen, und zwar so, daß eine Verwechselung mit FB und SCH auf einem BCCH ausgeschlossen ist. Dies geschieht z.B. durch den Empfang auf unterschiedlichen Zeitschlitzen.

Die Mobilstation decodiert das Signal der Triggerzelle und vergleicht die Information mit den Daten, die vom AGE-Broadcast-Kanal ausgesendet wurden. Dieser Datenvergleich ist nötig, um einerseits Triggerzellen unterscheiden zu können, falls mehrere die gleiche Frequenz benutzen, und um andererseits GSM-Zellen eindeutig von Triggerzellen unterscheiden zu können. Die Mobilstation mißt den Empfangspegel der Triggerzelle weiter und decodiert periodisch im Abstand von einigen Sekunden die Information der Triggerzelle erneut.

Übersteigt die Feldstärke UBC-Rx der Triggerzelle den Pegel P2, d.h. UBC-Rx > P2, und stimmen die übrigen Kriterien (Multiplexformat, Erhebungsstellenidentität, Mehrfachtriggerung), sendet die Mobilstation ein Signal an die AGE-Einheit. Dort wird die Gebührenerhebung veranlaßt. Das Auslösen des Triggers ist jetzt so lange blockiert, bis die Feldstärke der Triggerzelle, in der zuletzt abgebucht wurde, unter den Wert P1 gefallen ist oder eine andere Triggerzelle gefunden wurde.

Mehrfachtriggerung

Die Form der Triggerzellen ist an die Autobahn angepaßt. Dennoch läßt es sich nicht vermeiden, daß diese mit geringer Feldstärke auch auf benachbarten Straßen zu empfangen sind. Um die Sicherheit zu erhöhen, muß die Lage der Triggerzellen sorgfältig geplant werden. Autobahnabschnitte, an denen keine Straßen parallel verlaufen oder kreuzen sind zu bevorzugen. Taleinschnitte und Schallschutzwände erleichtern die Formung der Triggerzellen erheblich. In kritischen Situationen kann die Mehrfachtriggerung für die erforderliche Sicherheit sorgen.

Durch Mehrfachtriggerung können Fehltriggerungen, d.h. unberechtigte Gebührenerhebungen, vermieden werden. Sie ermöglicht auch die Fahrtrichtungserkennung und damit eine richtungsabhängige Tarifierung.

Bei Mehrfachtriggerung muß die Mobilstation zwei oder mehr gegebene Triggerzellen durchfahren. Die Zahl der Triggerzellen, die zur gleichen Erhebungsstelle gehören, wird vom der Serving-cell im AGE-Broadcastkanal ausgestrahlt. Die Triggerbedingungen (z.B. Feldstärke P2) müssen für jede einzelne Triggerzelle erfüllt sein. Hinzu kommt der Triggermodus, der im AGE-Broadcast-Kanal ausgesendet wird und angibt, in welchem Fall die Triggerung, d.h. die Gebührenerhebung durchgeführt wird. Dies sind z.B. die folgenden Fälle:

1. Alle n Triggerzellen wurden erkannt.
2. Eine der n Triggerzellen wurde erkannt.
3. m von n Triggerzellen wurden erkannt ($1 < m < n$).
4. Der Fall 1 oder 3 traf zu und der Feldstärkepegel der Triggerfrequenz(en) zwischen den Triggerzellen haben einen gewissen Pegel nicht unterschritten.
5. Einer der Fälle 1 bis 4 traf zu und die Triggerzellen wurden innerhalb einer beschränkten Zeit gefunden.

Die Triggerzellen, die zu einer Erhebungsstelle gehören, können die selbe oder auch verschiedene Frequenzen benutzen. Wichtig für die Triggerung in der Mobilstation ist lediglich, daß die Zellen zur gleichen Erhebungsstelle gehören. Die Zellen können anhand ihrer UBC-Nummer unterschieden werden.

Mit Mehrfachtriggerung kann die Fahrtrichtung anhand der Reihenfolge, in der die Zellen durchfahren werden, erkannt werden. Dies ist nicht nur auf einfachen Strecken, sondern sogar an Autobahnkreuzen möglich . Die beiden Triggerarten 'Einfachtriggerung' und 'Mehrfachtriggerung' können im gleichen Netz kombiniert eingesetzt werden.

Die Realisierung kleiner Zellen ist durch Mehrfachtriggerung möglich. Fig. 5 zeigt ein Beispiel dazu. Auch wenn der kritische Bereich P2 über die Fahrbahn hinausreicht, ist eine Fehltriggerung nicht möglich, da sowohl UBC1 wie auch UBC2 empfangen werden müssen.

Kriterien zur Gebührenabbuchung

Zur Gebührenabbuchung sind eine Reihe von Kriterien nötig, die eine Falschbuchung verhindern. Es müssen alle nachfolgend beschriebenen Kriterien erfüllt sein.

1. Kriterium Frequenz
Die Information, auf welchen Frequenzen Triggerzellen ihr Signal abstrahlen, wird von den umliegenden GSM-Zellen im AGE-Broadcast-Kanal ausgesendet. Die Mobilstation prüft ausschließlich diese Frequenzen auf die Feldstärke. Andere GSM-Frequenzen werden nicht für die AGE-Triggerung herangezogen.
2. Kriterium Feldstärke
Der minimale Feldstärkewert P2, mit der das Signal der Triggerzelle empfangen werden muß, wird von den umliegenden GSM-Zellen (S-Zelleni abgestrahlt. Nur wenn die Triggerzelle mindestens mit der Feldstärke P2 empfangen wird, wird der Trigger ausgelöst.
3. Kriterium Synchronisation

Die Triggerzellen senden ein Signal aus, das eine andere Kanalstruktur als die GSM-Kanäle hat. Es ist so gewählt, daß sich normale GSM-Mobilstationen nicht auf die Triggerzelle aufsynchronisieren können. AGE-Mobilstationen kennen die Multiplexstruktur von Triggerzellen und prüfen diese beim Synchronisationsvorgang. Nur wenn die Synchronisation gelingt, wird das empfangene Signal als Triggersignal akzeptiert.

4. Kriterium UBC-Identität

Die Mobilstation decodiert aus dem Signal der Triggerzelle die Identität der Erhebungsstelle. Nur wenn diese Identität mit derjenigen übereinstimmt, die im AGE-Broadcast-Kanal empfangen wurde, wird die Triggerzelle akzeptiert.

5. Kriterium Mehrfachtriggerung

Bei Mehrfachtriggerung muß das jeweilige Kriterium, das der Triggermodus vorschreibt, erfüllt werden. Es müssen eventuell mehrere Zellen empfangen werden, bevor der Trigger ausgelöst wird.

Aufbau des Triggersignals

Die Triggerzelle besteht aus einem Sender, der Signale aussendet, die physikalisch den GSM-Empfehlungen entsprechen. Modulation, Bandbreite, Kanalcodierung, der Burst-Aufbau, der Zeitmultiplexfaktor von 8 sind identisch mit den GSM-Spezifikationen. Dies erleichtert die Implementierung der AGE-spezifischen Funktionen in herkömmliche GSM-Mobilstationen.

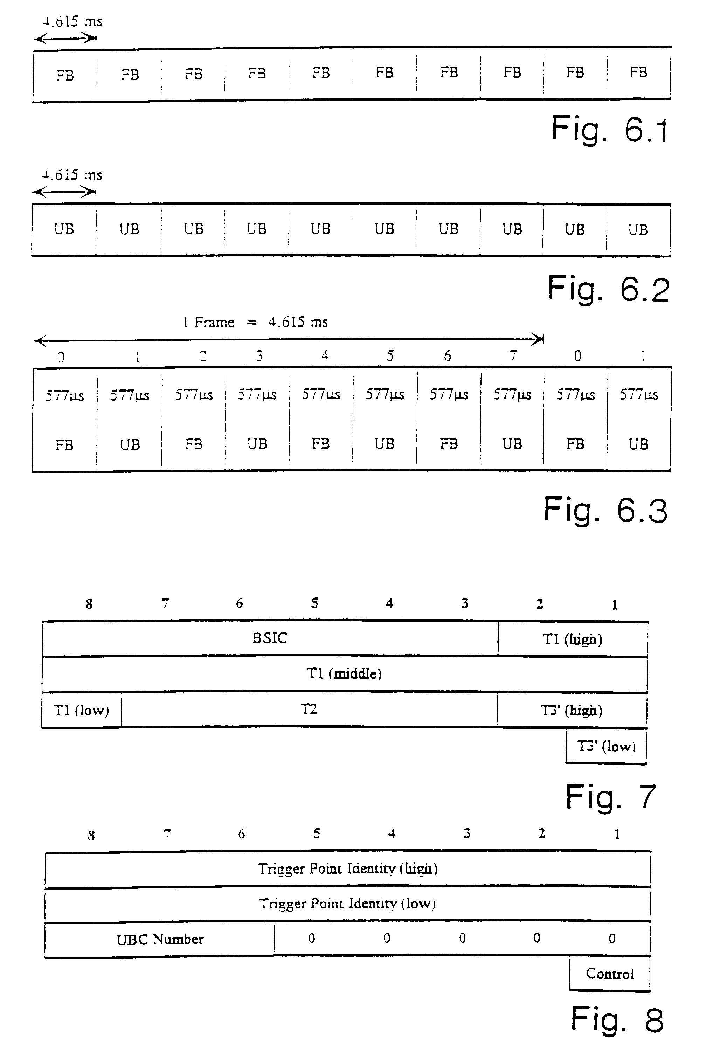

Es gibt jedoch in der Triggerzelle nur zwei logische Kanäle, den Frequency Correction Channel FCCH und den Underlay Broadcast Channel UBCH. Der FCCH wird in den Zeitschlitzen 0, 2, 4 und 6 (Fig. 6.1) und der UBCH wird in den Zeitschlitzen 1, 3, 5 und 7 (Fig. 6.2) gesendet. Die Zeitschlitze sind in sich nicht strukturiert, d.h. es gibt keinen Mehrfachrahmen. Es werden ständig Frequency correction Bursts FB bzw. Underlay-Broadcast-Bursts UB gesendet.

Durch die gewählte Multiplexstruktur entsteht auf Burst-Ebene das in Fig. 6.3 dargestellte Muster, bei dem sich ständig FB und UB abwechseln.

Eine GSM-Mobilstation ohne AGE-Funktion, die die Triggerzelle für eine GSM-Zelle hält und versucht sich in dieser Zelle einzubuchen, sucht zunächst den FCCH. Sie findet den Frequency Correction Brust und hält diesen Zeitschlitz für den Zeitschlitz Null. Anschließend versucht sie den SCH in dem selben Zeitschlitz zu decodieren. Da jedoch in dem gefundenen Zeitschlitz ausschließlich Frequency Correction Bursts gesendet werden, kann sie den Kanal nicht decodieren und streicht nach GSM-Recommendation 05.06 den Träger aus ihrer Liste. Sie wählt eine neue Frequenz und versucht den Vorgang erneut.

Der Frequency Correction Burst FB entspricht der Spezifikation nach GSM Recommendation 05.02 Kapitel 5.2.4. Der Underlay Broadcast Burst UB ist aufgebaut wie der Synchronization Burst (SB) nach GSM Recommendation 05.02 Kapitel 5.2.5. Die Kanalcodierung des UBCH entspricht ebenfalls der Codierung des Synchronization Channel SCH, vgl. GSM-Recommendation 05.03 Kapitel 4.6. Lediglich der Informationsinhalt ist anders als beim SCH.

Der Informationsinhalt des UBCH unterscheidet sich von dem des Synchronization Channel SCH. Die SCH-Nachricht ist in GSM-Recommendation 04.08 Kapitel 9.1.2.28 beschrieben. Die Informationsfelder des SCH sind in Fig. 7 dargestellt. Sie werden für den UBCH gemäß Fig. 6.2 neu definiert.

Die Informationsfelder sind die Trigger Point Identity, die UBC Number und das Control-Bit, deren Bedeutung im folgenden erläutert wird.

Die Trigger Point Identity ist die eindeutige Kennzeichnung der Erhebungsstelle innerhalb eines Landes. Zusammen mit der Landeskennzahl, die im AGE-Broadcast-Kanal ausgesendet wird, ist die Erhebungsstelle weltweit eindeutig. Es sind 65.536 Erhebungsstellen in einem Land möglich.

Die Triggerzellen einer Erhebungsstelle sind durchnummeriert. Die UBC-Nummer gibt die Nummer der aktuellen Triggerzelle an. Sie ist nur bei Mehrfachtriggerung wichtig. Es sind bis zu 8 UBC pro Erhebungsstelle möglich.

Das Controlbit zeigt an, ob sich an dieser Erhebungsstelle eine Überwachung befindet. Ist das Bit '0', findet keine, ist das Bit '1' dann findet eine Überwachung statt.

AGE-Broadcast-Kanal

Der AGE-Broadcast-Kanal sendet 2 Arten von Informationen aus. Die erste, die UBC-Information, ist für die Mobilstation bestimmt und wird für den Triggervorgang unbedingt benötigt. Die zweite Arte von Information, die Nutzerinformation, ist für den Fahrer bestimmt. Sie ist mit Ausnahme der Tarifinformation für die Ortsbestimmung nicht unbedingt nötig.

Die Informationen, die für das Erkennen einer Triggerzelle und das Auslösen der Gebührenabbuchung nötig sind (UBC-Informationen), sind nachfolgend aufgelistet.

*   Frequenz der UBC

Die Mobilstation muß die Frequenz der UBC kennen, damit sie priorisiert danach suchen kann. Durch diese Vorkenntnis beschleunigt sich die Suche nach Triggerzellen erheblich.

* minimale Empfangspegel P1 und P2

Wird eine Triggerzelle mindestens mit dem Empfangspegel P1 empfangen, so liest die Mobilstation die Informationen im UBCH. Wird der Empfangspegel P2 überschritten, so wird die Gebührenabbuchung ausgelöst.

* Identität der Erhebungsstelle

Die Identität der Erhebungsstelle wird auch von der Triggerzelle im UBCH ausgesendet. Die Mobilstation vergleicht diese Informationen.

* Zahl der Triggerzellen an der Erhebungsstelle

Die Zahl der Triggerzellen an der Erhebungsstelle ist für die Mehrfachtriggerung wichtig.

* Triggermodus

Der Triggermodus gibt an, wann das Auslösen der Gebührenabbuchung bei Mehrfacntriggerung erfolgt.

* Tarifinformationen

Tarifinformationen sind für das AGE-Gerät wichtig, das diesen Tarif bei der Gebührenabbuchung anwenden muß. Diese Informationen können für jede Triggerzelle unterschiedlich sein. Sie werden für jede Triggerzelle ausgesendet, die im erweiterten Bereich der GSM-Zelle liegt.

Nutzerinformationen sind Informationen über den Betreiber der Erhebungsstelle und Tarifinformationen. Die Tarifinformationen sind für den Benutzer wichtig, damit er den aktuellen Tarif vor dem Befahren der Straße kennt. Ferner können die Nutzerinformationen Verkehrsinformationen und sonstige Informationen der Autobahnbetreibergesellschaft enthalten, die für den Benutzer interessant, für das System jedoch nicht von Bedeutung sind. Diese Informationen sind optional. Sie können von Zelle zu Zelle unterschiedlich sein.

Für die Ortsbestimmung benötigt die Mobilstation die UBC-Informationen des AGE-Broadcast-Kanals. Diesen kann sie jedoch nur im Bereitschaftsbetrieb (idle mode) empfangen, d.h. wenn sie keine Verbindung zum Netz hat. Besteht z.B. eine Gesprächsverbindung, dann kann die Mobilstation den AGE-Broadcast-Kanal nicht abhören. Um sicherzustellen, daß die Mobilstation ständig die aktuellen Informationen erhält, werden ihr die UBC-Informationen des AGE-Broadcast-Kanals mittels Signalisierung über den SACCH übermittelt.

Mindestens nach jedem Zellwechsel (Hand-over) muß die Mobilstation die aktuelle Information des AGE-Broadcast-Kanals erhalten. Die Nutzerinformationen sind für die Ortsbestimmung nicht nötig, müssen aber eventuell aus anderen Gründen ebenfalls während eines Gespräches an den Teilnehmer weitergegeben werden.

Mobilstation

Die Mobilstation hat die Aufgabe, die Triggerzelle schnell zu erkennen und dabei die sonstigen GSM-Aufgaben nicht zu vernachlässigen. Diese Aufgabe wird ihr durch die folgenden Maßnahmen erleichert:

1. Vorkenntnisse über die Frequenzen der Triggerzellen.
2. Möglichst wenig Triggerfrequenzen, d.h. die Triggerzellen senden möglichst alle auf der gleichen Frequenz.
3. Häufiges Senden von Frequency Correction Bursts FB
4. Häufiges Senden von Underlay Broadcast Bursts UB

Die Frequenzen von Nachbarzellen im GSM-Netz werden in der BA-Liste im BCCH übertragen, während die Frequenzen von Triggerzellen im AGE-Broadcast-Kanal übertragen werden. Diese Maßnahme hat zwei Gründe: GSM-Mobilstationen ohne AGR versuchen nicht die Triggerzellen zu empfangen und AGE-Mobilstationen können Triggerzellen von GSM-Nachbarzellen unterscheiden und priorisiert behandeln.

Die Mobilstation befindet sich im idle mode, wenn sie keine aktive Verbindung zum Netz unterhält. Insbesondere belegt sie keinen funkkanal und hat dadurch genügend Zeit für das Erkennen von triggerzellen. Sie kann das Abtasten von Frequenzen (Monitoring) für die GSM-Zellen nach GSM-Recommendation 05.06 durchführen, d.h. daß diese Frequenzen relativ selten abgetastet werden. Es bleibt genügend Zeit, um die Feldstärke von Triggerfrequenzen häufig zu messen, z.B. eine Messung in jedem TDMA-Rahmen von 4,615 ms.

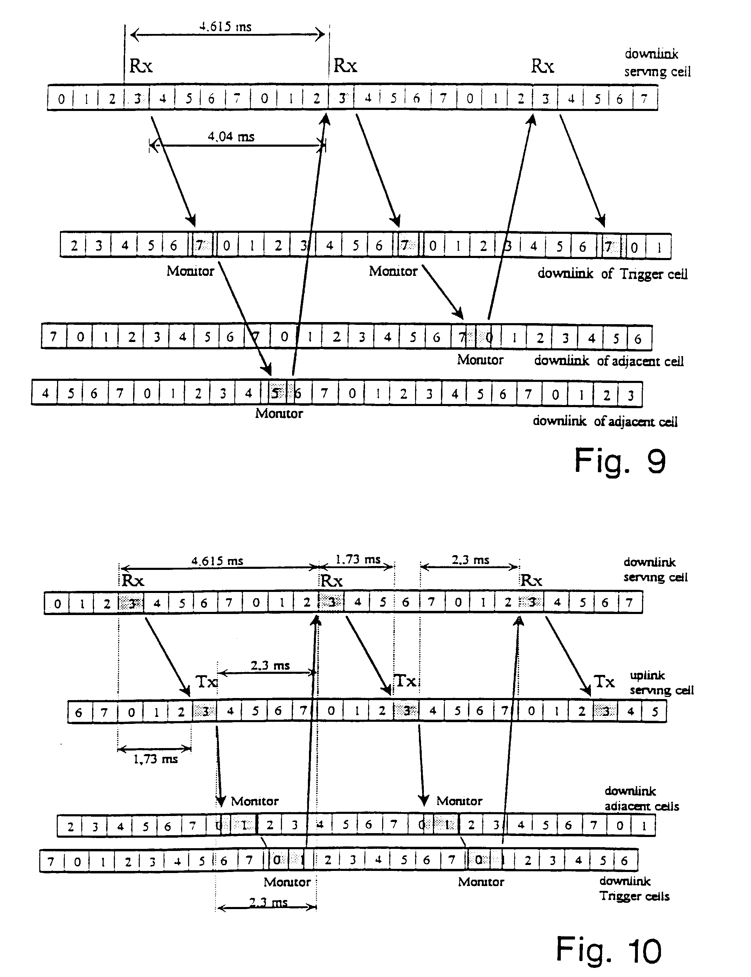

Engpässe gibt es höchstens in der Zeit, in der die Kanäle PCH oder AGCH abgehört werden. Da die Mobilstation in dieser Zeit nicht senden muß, kann sie innerhalb von einem TDMA-Rahmen ohne weiteres die Feldstärke von zwei verschiedenen Frequenzen messen. In Fig. 9 ist ein Beispiel dargestellt, in dem abwechselnd eine Triggerfrequenz und eine GSM-BCCH-Frequenz abgetastet werden. Es ist ist sogar möglich in der Empfangspause von 4,04 ms mehr als 2 Frequenzen abzutasten.

Zwei Feldstärkemessungen pro Rahmen von 4,615 ms ergeben 433 Feldstärkemessungen pro Sekunde. Geht man davon aus, daß einige Feldstärkewerte gemittelt werden müssen, dann kann die Mobilstation im idle mode den Träger einer Triggerzelle innerhalb von 100 ms sehr sicher entdecken.

Die Mobilstation befindet sich im connected mode, wenn sie eine aktive Verbindung zum Netz, in diesem Fall zur S-Zelle, unternält und z.B. über einen TCH Daten austauscht. In diesem Zustand werden die größten Anforderungen bezüglich der Messung der Empfangsleistung auf Frequenzen von Nachbarzellen und Triggerzellen (monitoring) an die Mobilstation gestellt (Fig. 10).

In connected mode muß das Abtasten (Monitoring) von Nachbarzellen zwischen dem Senden und dem Empfangen auf dem eigenen Kanal (Tx und Rx in Fig. 10) durchgeführt werden. In dieser Zeit, die 2,3 ms beträgt, können zwei Feldstärkemessungen durchgeführt werden. Die Frequenz muß dazu Innerhalb von 2,3 ms dreimal umgestimmt werden. Bei einer Umstimmzeit für den Frequenz-syntheziser von etwa 0,1 ms verbleiben zweimal 1 ms Meßzeit, was bei der Kanalbandbreite von 270 kHz völlig genügt. Eine der beiden Frequenzabtastungen ist für Triggerzellen und die andere ist für GSM-Nachbarzellen reserviert.

Es ergeben sich in einem Mehrfachrahmen von 120 ms je 26 Abtastungen für Triggerfrequenzen und für GSM-Nachbarzellen. Berücksichtigt man, daß der leere Zeitschlitz (vgl. Idle timeslot GSM-Rec. 05.02) zum Lesen des SCH von GSM-Nachbarzellen benötigt wird, entfallen die Abtastungen unmittelbar davor und danach. Es verbleiben noch 24 Abtastungen von Trigger-frequenzen in 120 ms. Daraus ergeben sich je nach Zeitlage 19 bis 21 Abtastungen pro 100 ms. Es ist also auch im connected mode möglich, eine Triggerzelle innerhalb von 100 ms sicher zu erkennen.

Zum Erkennen von Triggerzellen müssen einerseits eventuell mehrere Frequenzen abgetastet werden, andererseits müssen für eine sichere Aussage mehrere Abtastwerte gemittelt werden. Soll das Erkennen einer Triggerzelle sicher und extrem schnell erfolgen, dann müssen besondere Maßnahmen getroffen werden um möglichst viele der Abtastungen, die für Triggerfrequenzen reserviert sind, für die aktuelle Triggerzelle verwenden zu können. Dies wird in dem folgenden Beispiel verdeutlicht.

Es wird angenommen, daß für die Triggerzellen in der Umgebung der Serving Cell sechs verschiedene Frequenzen benötigt würden, was schon eine hohe Zahl ist. Von den 24 Abtastungen für Triggerzellen in 120 ms so verbleiben also 24/6 = 3 Abtastungen pro Triggerfrequenz in 120 ms. Diese Zahl ist zu gering, um eine sichere Aussage über das Vorhandensein einer Triggerzelle machen zu können. Sie genügt jedoch für eine grobe Vorhersage. Wenn die Mobilstation eine merkliche Feldstärke entdeckt, das trifft z.B. zu wenn sie sich dem Bereich 2 nähert, dann kann sie dieser Zelle Priorität einräumen um die Feldstärke sicher feststellen. Dazu tastet die MS die sechs Frequenzen nicht gleichmäßig ab, sondern räumt ihnen entsprechend ihrer Feldstärke Priorität ein. Von den 24 Abtastungen in 120 ms erhält die stärkste Zelle z.B. 10, die zweitstärkste sechs, und die restlichen sechs Abtastungen werden auf die schwächsten vier Zellen verteilt.

Wird die Triggerzelle mit sehr hohem Pegel empfangen, dann könnte die Mobilstation sogar auf das Abtasten von GSM-Nachbarzellen zugunsten der Triggerzelle verzichten, denn auf der kurzen Distanz von weniger als 50 m ist ein Hand-over nicht unbedingt nötig. Die Zahl der benötigten Frequenzen steht nur indirekt im Zusammenhang mit der Zahl der Triggerzellen, sie ist vor allem von der Funknetzplanung abhängig. Im günstigsten Fall wird nur eine Frequenz für alle Triggerzellen benötigt.

Hat die Mobilstationen auf der Triggerfrequenz eine hinreichende Feldstärke gefunden, z.B. die Feldstärke P1 (Fig. 3), sucht sie den Frequency Correction Burst FB, der bei GSM im Zeitschlitz 0 gesendet wird. Der FB ermöglicht die Synchronisation. Um den FB bereits mit einmaligem Lesen finden zu können, wird er aile 9,23 ms gesendet (Fig. 6.3).

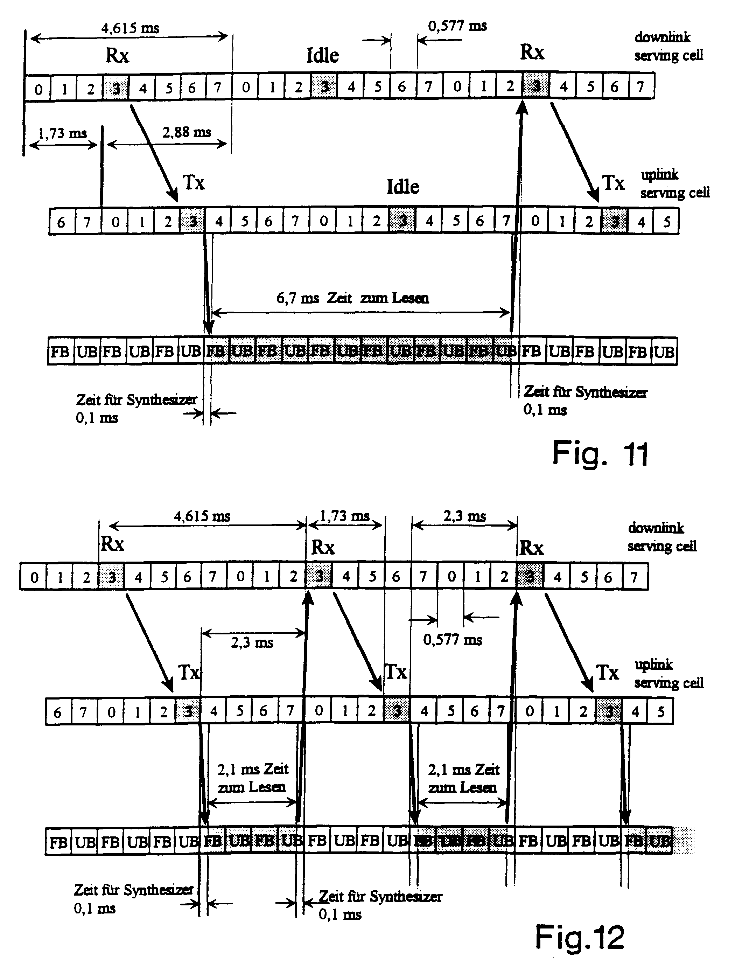

Der UB wird genau so häufig gesendet wie der FB und kann bei der gewählten Kanalstruktur gleichzeitig mit dem FB gelesen werden. Fig. 11 zeigt den Fall, daß die Synchronisation und das Lesen des UB während des Idle-Zeitschlitzes erfolgen. Der Idle-Zeitschlitz, in dem die Mobilstation Zeit für das Lesen von anderen als der eignen Zelle hat, erscheint alle 120 ms. Die Mobilstation kann ein Signal von bis zu 6,7 ms Dauer einlesen und auswerten. Weniger als die Hälfte der Signaldauer genügt aber bereits. In 2,9 ms können mindestens vier Bursts zu je 0,577 ms vollständig eingelesen werden. Bei dem gewählten Signalaufbau gemäß Fig. 6.3 stehen damit mindestens zwei FB und zwei UB zur Auswertung bereit. Bei der hohen Feldstärke und der direkten Sicht zwischen Sende- und Empfangsantenne genügt mit sehr hoher Wahrscheinlichkeit bereits ein FB und ein UB zum Decodieren des Triggersignals.

In Fig. 12 ist die Synchronisation und das Lesen des UB während einer Verbindung der Mobilstation zur Serving Cell, d.h. im connected mode, dargestellt. In der Pause zwischen Senden Tx und Empfangen Rx können der FB und der UB sicher empfangen werden. Die Mobilstation kann auf diese Weise das Triggersignal in weniger als 50 ms lesen. Wie gezeigt, kann die Mobilstation die Triggerzelle innerhalb von 120 ms sicher decodieren.

Größe der Triggerzelle

Die Ausdehnung der Triggerzelle hängt davon ab, mit welcher Geschwindigkeit die Triggerzelle durchfahren werden darf und wie schnell die Mobilstation die Triggerzelle erkennen kann. Die Triggerzelle muß mindestens so groß sein, daß die Aufenthaltsdauer der Mobilstation in der Zelle größer ist als die Zeit, die zum Erfassen der Zelle benötigt wird. Es gilt Aufenthaltsdauer = Zellgröße / Fahrzeuggeschwindigkeit. Setzt man Aufenthaltsdauer > Erkennungszeit und löst nach der Zellgröße auf, so ergibt sich:

Zellgröße > Erkennungszeit * Fahrzeuggeschwindigkeit. Die maximale Fahrzeuggeschwindigkeit wird mit 250 km/h (= 70 m/s) angenommen. Die Größe für die Bereiche 2 und 3 (Fig. 3) muß getrennt ermittelt werden.

Innerhalb des Bereiches 3 muß die Mobilstation die Feldstärke P2 sicher erkennen. Für die Feldstärkemessung werden 100 ms veranschlagt. Für die Geschwindigkeit von 250 km/h ergibt sich die Größe für den Bereich 3 zu 7 m.

Innerhalb des Bereiches 2 muß die Mobilstation die Feldstärke P1 sicher erkennen und den Underlay Broadcast Channel UBCH lesen. Für die Feldstärkemessung beim Übergang von Bereich 1 nach Bereich 2 werden 240 ms Mittelungszeit veranschlagt und für das Lesen des UBCH zusätzlich 120 ms. Die benötigte Zeit beträgt also 360 ms. Zusätzlich ist der Bereich P2 in dem Bereich P1 enthalten und die Zeit von 100 ms muß noch zu den 360 ms addiert werden.. Für den Bereich P1 ergibt sich

| | | |
|---|---|---|
| Zeit zum Erkennen der Zelle | 240 ms | = 17 m |
| Zeit für das UBCH lesen | 120 ms | = 9 m |
| Zeit für den Bereich 3 | 100 ms | = 7 m |
| Summe | 460 ms | = 33 m |

Für den Bereich 2 genügen also 33 m, wobei die Größe unkritisch ist, denn in diesem Bereich wird die Gebührenabbuchung nicht ausgelöst. Er kann er bedenkenlos vergrößert werden.

**Patentansprüche**

1. Verfahren zur Ortsbestimmung von Mobilstationen in einem zellular aufgebauten Mobilfunknetz, wobei die Mobilstationen zusätzlich zu den Funktionen innerhalb des Mobilfunknetzes zur Ortsbestimmung Signale von Sendern auswerten, die jeweils eine örtlich begrenzte Triggerzelle (underlay broadcast cell) bilden, dadurch gekennzeichnet, daß die Mobilstationen Informationen, die für die jeweilige Triggerzelle von dem zugeordneten Sender abgestrahlt werden, mit den Informationen über die Triggerzellen vergleichen, die im Mobilfunknetz abgestrahlt werden, und daß die von dem der Triggerzelle zugeordneten Sender empfangenen Signale nur dann zur Ortsbestimmung verwendet werden, wenn die Informationen übereinstimmen.

2. Verfahren nach Anspruch 1, dadurch gekennzeichnet, daß den Mobilstationen die Frequenzen der Triggerzellen durch das Mobilfunknetz im Broadcast-Verfahren mitgeteilt werden.

3. Verfahren nach einem der vorhergehenden Ansprüche, dadurch gekennzeichnet, daß die Mobilstationen die Feldstärke der jeweiligen Triggerzelle zur Ortsbestimmung auswerten.

4. Verfahren nach Anspruch 3, dadurch gekennzeichnet, daß von den Mobilstationen mindestens zwei Feldstärkepegel der Triggerzelle unterschieden werden.

5. Verfahren nach einem der vorhergehenden Ansprüche, dadurch gekennzeichnet, daß der oder die für die Triggerzellen relevante(n) Feldstärkepegel durch das Mobilfunknetz im Broadcast-Verfahren mitgeteilt werden.

6. Verfahren nach Anspruch 3, dadurch gekennzeichnet, daß die Mobilstationen die Frequenzen von Triggerzellen regelmäßig abtasten und daß eine der Frequenzen häufiger abgetastet wird, sobald der Empfangspegel einen ersten vorgegebenen Feldstärkepegel überschreitet.

7. Verfahren nach einem der Ansprüche 3 bis 6, dadurch gekennzeichnet, daß die Mobilstationen die Frequenzen von Triggerzellen regelmäßig abtasten und daß die empfangene Information ausgewertet wird, wenn der Empfangspegel einen vorgegebenen Feldstärkepegel überschreitet.

8. Verfahren nach einem der vorhergehenden Ansprüche, dadurch gekennzeichnet, daß die Ergebnisse der Auswertung von Signalen mehrerer Sender (Triggerzellen) miteinander verknüpft werden.

9. Verfahren nach einem der vorhergehenden Ansprüche, dadurch gekennzeichnet, daß die Sender der Triggerzellen Signale aussenden, die aus einzelnen Bursts bestehen, die der physikalsichen Ebene im GSM-Standard entsprechen.

10. Verfahren nach Anspruch 9, dadurch gekennzeichnet, daß abwechselnd Frequenzkorrektur-Bursts (FB) und Informations-Bursts (UBB) gesendet werden.

11. Verfahren nach einem der vorhergehenden Ansprüche, dadurch gekennzeichnet, daß die von den Sendern ausgesandten Signale eine Identifizierung einer für eine Gebührenerhebung maßgeblichen Erhebungsstelle enthalten.

12. Verfahren nach Anspruch 11, dadurch gekennzeichnet, daß die von den Sendern ausgesandten Signale ferner für den Fall, daß mehrere Triggerzellen eine Erhebungsstelle für Benutzungsgebühren für Verkehrswege bilden, eine Nummer der jeweiligen Triggerzelle bezüglich Ihrer Zugehörigkeit zur Erhebungsstelle enthalten.

13. Verfahren nach einem der Ansprüche 11 oder 12, dadurch gekennzeichnet, daß die Signale der Sender jeweils eine Information enthalten, ob an der jeweiligen Erhebungsstelle eine Überwachung bezüglich einer Gebührenerhebung stattfindet.

14. Anordnung zur Ortsbestimmung von Mobilstationen in einem zellular aufgebauten Mobilfunknetz, wobei die Mobilstationen zusätzlich zu den Funktionen innerhalb des Mobilfunknetzes zur Ortsbestimmung mit Auswertevorrichtungen für Signale von Sendern ausgestattet sind, welche jeweils eine örtlich begrenzte Triggerzelle (underlay broadcast cell) bilden, dadurch gekennzeichnet, daß die Mobilstationen Einrichtungen zum Vergleich von ersten Informationen enthalten, die für die jeweilige Triggerzelle von dem zugeordneten Sender (2) abgestrahlt werden, mit zweiten Informationen über die Triggerzellen, die im Mobilfunknetz abgestrahlt werden, und daß nur bei Übereinstimmung der ersten mit den zweiten Informationen die ersten Informationen einer Ortsbestimmungseinrichtung zugeleitet werden.

15. Anordnung nach Anspruch 14, dadurch gekennzeichnet, daß die Sender zweier einer Erhebungsstelle bildender Triggerzellen auf verschiedenen Seiten eines Verkehrsweges angeordnet sind.

16. Anordnung nach Anspruch 14, dadurch gekennzeichnet, daß der zugeordnete Sender (2) mit einer Sende/Empfangseinrichtung (8) verbunden ist, welche funktionsmäßig einer Mobilstation innerhalb des Mobilfunknetzes entspricht und eine Übertragung von Daten von und zu einer Wartungs- und Betriebseinrichtung (OMC) (10) ermöglicht.

17. Verfahren zur Ortsbestimmung von Fahrzeugen, die sich auf einem Verkehrsweg befinden, dadurch gekennzeichnet, daß von in Fahrzeugen angeordneten Empfängern Signale von auf Abschnitte des Verkehrsweges gerichteten Sendern empfangen werden, wobei die Signale Informationen zur Identifizierung des jeweiligen Senders enthalten, daß eine Ortsbestimmung nur erfolgt, wenn Signale zweier einander zugeordneter Sender empfangen werden, und in den Signalen eine Kennung, die die Positionierung der Sender auf beiden Seiten des Verkehrsweges beinhaltet, ausgewertet wird.

18. Verfahren nach Anspruch 17, dadurch gekennzeichnet, daß die Signale der einander zugeordneten Sender zeitlich versetzte Verläufe aufweisen.

## Claims

1. Method for position finding of mobile stations in a mobile telephone network of cellular structure, in which the mobile stations in addition to the functions within the mobile telephone network for position finding evaluate signals from transmitters which each form a locally limited trigger cell (underlay broadcast cell), characterised in that the mobile stations compare information which is emitted for the respective trigger cell by the associated transmitter, with the information on the trigger cells which is emitted in the mobile telephone network, and in that the signals received by the transmitter associated with the trigger cell are used for position finding only when the information corresponds.

2. Method according to claim 1, characterised in that the frequencies of the trigger cells are conveyed to the mobile stations by the mobile telephone network by the broadcast method.

3. Method according to any one of the preceding claims, characterised in that the mobile stations evaluate the field strength of the respective trigger cell for position finding.

4. Method according to claim 3, characterised in that a distinction is made by the mobile stations between at least two field strength levels of the trigger cell.

5. Method according to any one of the preceding claims, characterised in that the field strength level or levels relevant to the trigger cells are conveyed by the mobile telephone network by the broadcast method.

6. Method according to claim 3, characterised in that the mobile stations regularly scan the frequencies of trigger cells and in that one of the frequencies is scanned more often as soon as the reception level exceeds a first predetermined field strength level.

7. Method according to any one of claims 3 to 6, characterised in that the mobile stations regularly scan the frequencies of trigger cells and in that the received information is evaluated when the reception level exceeds a predetermined field strength level.

8. Method according to any one of the preceding claims, characterised in that the results of the evaluation of signals of several transmitters (trigger cells) are linked to each other.

9. Method according to any one of the preceding claims, characterised in that the transmitters of the trigger cells emit signals consisting of individual bursts which correspond to the physical plane in the GMS standard.

10. Method according to claim 9, characterised in that frequency correction bursts (FB) and information bursts (UBB) are transmitted alternately.

11. Method according to any one of the preceding claims, characterised in that the signals emitted by the transmitters contain an identification of a collection point which is the standard for collecting charges.

12. Method according to claim 11, characterised in that the signals emitted by the transmitters, in the event that several trigger cells form a collection point for usage charges for traffic routes, further contain a number of the respective trigger cell in relation to its belonging to the collection point.

13. Method according to either of claims 11 or 12, characterised in that the signals of the transmitters each contain an item of information as to whether monitoring in relation to collection of charges takes place at the respective collection point.

14. Arrangement for position finding of mobile stations in a mobile telephone network of cellular structure, in which the mobile stations in addition to the functions within the mobile telephone network for position finding are equipped with evaluating devices for signals from transmitters which each form a locally limited trigger cell (underlay broadcast cell), characterised in that the mobile stations contain devices for the comparison of first items of information, which are emitted for the respective trigger cell by the associated transmitter (2), with second items of information on the trigger cells, which are emitted in the mobile telephone network, and in that only if the first items of information corresponds with the second items are the first items fed to a position finding device.

15. Arrangement according to claim 14, characterised in that the transmitters of two trigger cells forming a collection point are arranged on different sides of a traffic route.

16. Arrangement according to claim 14, characterised in that the associated transmitter (2) is connected to a transmitting/receiving device (8) which functionally corresponds to a mobile station within the mobile telephone network and allows transmission of data from and to an operation and maintenance device (OMC) (10).

17. Method for position finding of vehicles which are located on a traffic route, characterised in that signals from transmitters directed onto sections of the traffic route are received by receivers arranged in vehicles, wherein the signals contain information for identification of the respective transmitter, in that position finding is effected only when signals of two transmitters associated with each other are received, and in the signals is evaluated a code which contains the positioning of the transmitters on both sides of the traffic route.

18. Method according to claim 17, characterised in that the signals of the transmitters associated with each other have patterns staggered in time.

**Revendications**

1. Procédé pour localiser des stations mobiles dans un réseau de radiotéléphonie à structure cellulaire, selon lequel les stations mobiles, en plus des fonctions à l'intérieur du réseau, analysent pour la localisation les signaux d'émetteurs qui forment une cellule de déclenchement (underlay broadcast cell ou cellule de radiodiffusion de base) localement, caractérisé en ce que les stations mobiles comparent des informations qui sont émises pour la cellule de déclenchement correspondante par l'émetteur affecté, aux informations concernant les cellules de déclenchement qui sont émises dans le réseau, et en ce que les signaux reçus par l'émetteur affecté à la cellule de déclenchement ne sont utilisés pour la localisation que si les informations concordent.

2. Procédé selon la revendication 1, caractérisé en ce que les fréquences des cellules de déclenchement sont communiquées aux stations mobiles par le réseau de radiotéléphonie selon le procédé de radiodiffusion.

3. Procédé selon l'une des revendications précédentes, caractérisé en ce que les stations mobiles évaluent l'intensité de champ de la cellule de déclenchement correspondante en vue de la localisation.

4. Procédé selon la revendication 3, caractérisé en ce que les stations mobiles distinguent au moins deux niveaux d'intensité de champ de la cellule de déclenchement.

5. Procédé selon l'une des revendications précédentes, caractérisé en ce que le ou les niveaux d'intensité de champ importants pour les cellules de déclenchement sont communiqués par le réseau selon le procédé de radiodiffusion.

6. Procédé selon la revendication 3, caractérisé en ce que les stations mobiles balaient régulièrement les fréquences de cellules de déclenchement, et en ce que l'une des fréquences est balayée plus souvent dès que le niveau de réception dépasse un premier niveau d'intensité de champ prédéfini.

7. Procédé selon l'une des revendications 3 à 6, caractérisé en ce que les stations mobiles balaient régulièrement les fréquences de cellules de déclenchement, et en ce que l'information reçue est analysée si le niveau de réception dépasse un niveau d'intensité de champ prédéfini.

8. Procédé selon l'une des revendications précédentes, caractérisé en ce que les résultats de l'analyse de signaux de plusieurs émetteurs (cellules de déclenchement) sont reliés.

9. Procédé selon l'une des revendications précédentes, caractérisé en ce que les émetteurs des cellules de déclenchement émettent des signaux qui se composent de paquets individuels correspondant au plan physique dans la norme GSM.

10. Procédé selon la revendication 9, caractérisé en ce que des paquets de correction de fréquence (FB) et des paquets d'informations (UBB) sont émis en alternance.

11. Procédé selon l'une des revendications précédentes, caractérisé en ce que les signaux émis par les émetteurs contiennent une identification d'un lieu de perception déterminant pour percevoir un droit.

12. Procédé selon la revendication 11, caractérisé en ce que les signaux émis par les émetteurs, au cas où plusieurs cellules de déclenchement forment un lieu de perception pour des droits d'utilisation de voies de circulation, contiennent également un numéro de la cellule de déclenchement correspondante concernant l'appartenance de celle-ci au lieu de perception.

13. Procédé selon la revendication 11 ou 12, caractérisé en ce que les signaux des émetteurs contiennent une information indiquant si une surveillance de la perception du droit a lieu au lieu de perception.

14. Dispositif pour localiser des stations mobiles dans un réseau de radiotéléphonie à structure cellulaire, dans lequel les stations mobiles, en plus des fonctions à l'intérieur du réseau, sont équipées pour la localisation de dispositifs d'analyse pour les signaux d'émetteurs qui forment une cellule de déclenchement (underlay broadcast cell ou cellule de radiodiffusion de base) limitée localement, caractérisé en ce que les stations mobiles contiennent des appareils pour comparer des premières informations qui sont émises pour la cellule de déclenchement correspondante par l'émetteur affecté (2), à des secondes informations sur les cellules de déclenchement qui sont émises dans le réseau, et en ce que les premières informations ne sont transmises à un dispositif de localisation que si elles concordent avec les secondes.

**15.** Dispositif selon la revendication 14, caractérisé en ce que les émetteurs de deux cellules de déclenchement formant un lieu de perception sont disposés sur des côtés différents d'une voie de circulation.

**16.** Dispositif selon la revendication 14, caractérisé en ce que l'émetteur affecté (2) est relié à un appareil émetteur-récepteur (8) qui correspond par son fonctionnement à une station mobile à l'intérieur du réseau et qui permet une transmission de données à partir d'un appareil de maintenance et d'exploitation (OMC) (10) et vers celui-ci.

**17.** Dispositif pour localiser des véhicules qui se trouvent sur une voie de circulation, caractérisé en ce que des émetteurs disposés dans des véhicules reçoivent des signaux d'émetteurs dirigés vers des tronçons de la voie de circulation, ces signaux contenant des informations destinées à identifier l'émetteur, en ce qu'une localisation n'a lieu que si les signaux de deux émetteurs affectés l'un à l'autre sont reçus, et dans les signaux, une identification contenant le positionnement des émetteurs des deux côtés de la voie de circulation est analysée.

**18.** Procédé selon la revendication 17, caractérisé en ce que les signaux des émetteurs affectés l'un à l'autre présentent des courbes décalées dans le temps.

**Fig. 1**

1 GSM BTS
5 Trigger-Zelle 1. UBC
3
2 AGE BTS
4

AGE Broadcast
Kommunikation

AGE - Einheit    6

Chipkarte    7

Trigger für
Gebührenerhebung

Mobilstation    5

**Fig. 2**

P1
P2
Bereich 3
Bereich 1    Bereich 2

**Fig. 3**

Fig. 4

Fig. 5

4.615 ms

| FB | FB | FB | FB | FB | FB | FB | FB | FB | FB |

**Fig. 6.1**

4.615 ms

| UB | UB | UB | UB | UB | UB | UB | UB | UB | UB |

**Fig. 6.2**

1 Frame = 4.615 ms

| 0 | 1 | 2 | 3 | 4 | 5 | 6 | 7 | 0 | 1 |
|---|---|---|---|---|---|---|---|---|---|
| 577µs | 577µs | 577µs | 577µs | 577µs | 577µs | 577µs | 577µs | 577µs | 577µs |
| FB | UB | FB | UB | FB | UB | FB | UB | FB | UB |

**Fig. 6.3**

| 8 | 7 | 6 | 5 | 4 | 3 | 2 | 1 |
|---|---|---|---|---|---|---|---|
| BSIC | | | | | | T1 (high) | |
| T1 (middle) | | | | | | | |
| T1 (low) | T2 | | | | | T3' (high) | |
| | | | | | | | T3' (low) |

**Fig. 7**

| 8 | 7 | 6 | 5 | 4 | 3 | 2 | 1 |
|---|---|---|---|---|---|---|---|
| Trigger Point Identity (high) | | | | | | | |
| Trigger Point Identity (low) | | | | | | | |
| UBC Number | | | 0 | 0 | 0 | 0 | 0 |
| | | | | | | | Control |

**Fig. 8**

Fig. 9

Fig. 10

Fig. 11

Fig.12